# EUROPEAN PATENT SPECIFICATION

(11) **EP 3 074 987 B1**
(45) Date of publication and mention of the grant of the patent: **02.06.2021**
(21) Application number: 14863209.4
(22) Date of filing: 25.11.2014
(51) Int. Cl.: H01F 5/00, H01F 27/28, H01F 27/36, H01F 41/04, H01F 38/14, H04B 5/00, H02J 50/00, H02J 50/05, H02J 50/10, H02J 50/70

(54) **WIRELESS CHARGING COIL**
DRAHTLOSLADESPULE
BOBINE DE CHARGE SANS FIL

(30) Priority: 25.11.2013 US 201361908573 P; 29.05.2014 US 201462004587 P; 27.08.2014 US 201414470381; 10.11.2014 US 201462077721 P
(43) Date of publication of application: 05.10.2016
(73) Proprietor: A K Stamping Co. Inc., Mountainside NJ 07092 (US)
(72) Inventor: KURZ, Arthur, Mountainside, NJ 07092 (US); DUETSCH, Bernard, Bound Brook, NJ 08805 (US); KURZ, Joshua, Jersey City, NJ 07302 (US)
(74) Representative: Hoffmann Eitle
(86) International application number: PCT/US2014/067440
(87) International publication number: WO 2015/077782

(56) References cited:
- EP-A2- 2 645 385
- WO-A1-2013/046533
- GB-B- 2 369 251
- US-A- 3 214 315
- US-A- 5 142 767
- US-A- 5 831 348
- US-A1- 2004 231 138
- US-A1- 2011 102 125
- US-A1- 2013 181 668

## Description

### BACKGROUND

### FIELD OF THE DISCLOSURE

The present disclosure relates to a wireless charging coil and methods for manufacturing thereof. More specifically, the present disclosure relates to a bifilar parallel wound, series connected wireless charging coil.

### RELATED ART

Wireless power transfer is the transfer of electrical power from a base station (transferring power) to a mobile device (consuming power) through electromagnetic induction (inductive power) and/or resonant frequency method. Wireless power transfer is becoming increasingly popular in mobile devices, and particularly in smartphones. A popular standard for inductive charging technology is the Qi interface standard developed by the Wireless Power Consortium, which has several protocols to allow the wireless transfer of electrical power between electronic devices. Other standards may make use of electromagnetic induction or resonant frequency to wirelessly charge devices. A mobile device (or any other electronic device) must meet certain requirements and performance standards in order to be Qi compliant.

Consumers generally want their mobile devices to be small and thin but also powerful and efficient, which are often counteracting goals. More specifically, charging coils must vary the material thickness to lower resistance and increase efficiency. Further, maximizing these goals can lead to performance and manufacturing limitations.

What would be desirable, but has not yet been developed, is a thinner and more efficient wireless charging coil for wireless power transfer between electronic devices.

EP 2 645 385 A2 discloses a thin film coil and an electronic device having the same, the thin film coil including a substrate and a coil pattern including a first coil strand and a second coil strand formed on both surfaces of the substrate, respectively, wherein the first coil strand formed on one surface of the substrate includes at least one gyration path that passes through the other surface of the substrate and gyrates.

### SUMMARY

The present disclosure relates to wireless charging coils and methods for making thereof. More specifically, the present disclosure relates to a planar bifilar parallel-wound, series connected wireless charging coil. The coil has a thinner thickness (e.g., low profile), an increased density (e.g., high fill factor), and higher efficiency (e.g., lower resistance) than conventional wireless charging coils. The invention is defined in independent claims 1 and 9.

### BRIEF DESCRIPTION OF THE DRAWINGS

The foregoing features of the disclosure will be apparent from the following Detailed Description, taken in connection with the accompanying drawings, in which:
**FIG. 1** is a diagram showing processing steps for manufacturing a wireless charging coil;
**FIG. 2** is a schematic view of a first stamped coil with tie bars;
**FIG. 3** is a schematic view of a second stamped coil with tie bars;
**FIG. 4** is a schematic view of an assembled coil after the tie bars of the first and second stamped coils have been removed;
**FIG. 5** is a schematic view of the assembled wireless charging coil with jumpers attached;
**FIG. 6** is a close up view of portion A of **FIG. 5**;
**FIG. 7** is a schematic view of an electrical component assembly including a wireless charging coil and NFC antenna;
**FIG. 8** is a schematic view of an assembled wireless charging coil with planar bifilar coils;
**FIG. 9** is a cross-sectional view of a portion of the wireless charging coil of **FIG. 8****;**
**FIG. 10** is a schematic view of an assembled wireless charging coil with stacked bifilar coils;
**FIG. 11** is a cross-sectional view of a portion of the wireless charging coil of **FIG. 10****;**
**FIG. 12** is a perspective view of an electrical component assembly;
**FIG. 13** is an exploded view of the electrical component assembly of **FIG. 12**
**FIG. 14** is a perspective view of a resonant coil;
**FIG. 15** is a perspective view of a resonant coil assembly;
**FIG. 16** is a perspective view of a folded stamped resonant coil;
**FIG. 17** is a perspective view of the coil of **FIG. 16** partially opened;
**FIG. 18** is a perspective view of the coil of **FIG. 16** fully opened;
**FIG. 19** is an exploded view of a low profile electrical component assembly; and
**FIG. 20** is a perspective view of the filler material of **FIG. 19****;**
**FIG. 21** is a diagram showing processing steps for manufacturing a wireless charging coil with adhesive;
**FIG. 22** is a partial cross-sectional view of a first stamped coil when applied to a first laminate;
**FIG. 23** is a partial cross-sectional view of an assembled coil positioned between a first and second laminate;
**FIG. 24** is partial cross-sectional view of an assembled coil;
**FIG. 25** is a partial top view of the assembled coil of **FIG. 24**; and
**FIG. 26** is a top view of an assembled coil of the present disclosure.

### DETAILED DESCRIPTION

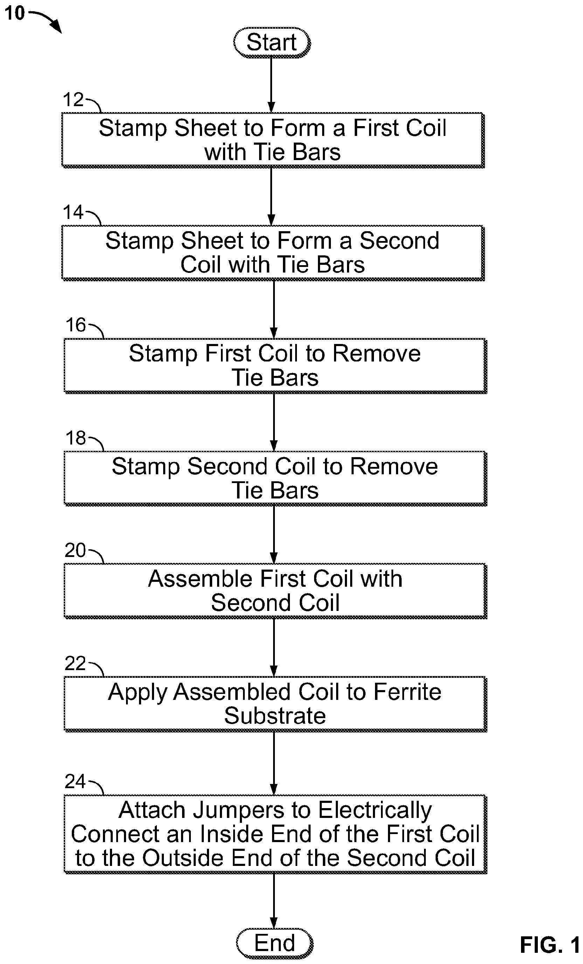

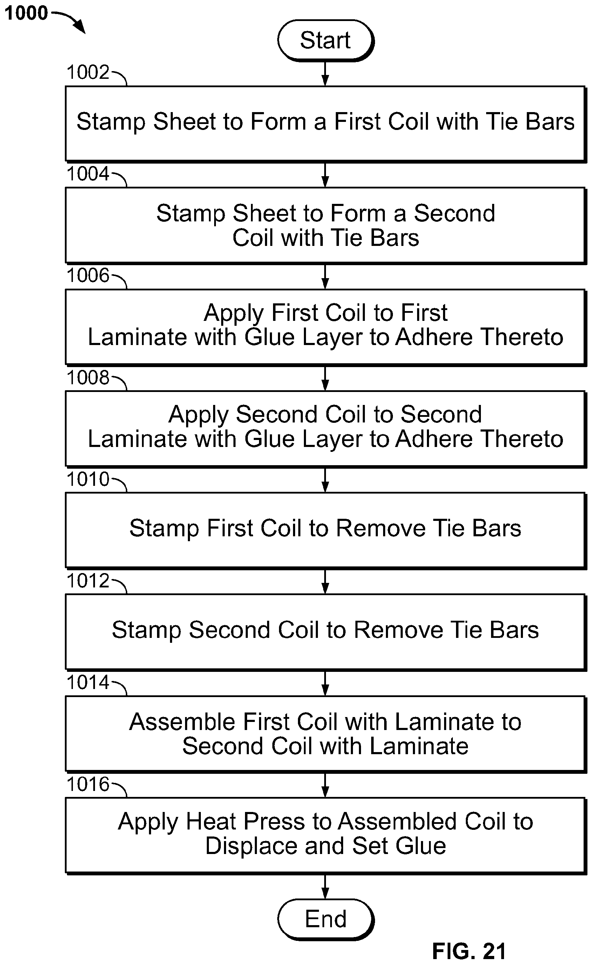

Figure 1 to 20 and 26 show examples not according to the invention but present for illustration purposes only. Figures 21 to 25 show embodiments of the invention. The present disclosure relates to a wireless charging coil and methods of making same. As discussed in more detail below in connection with **FIGS. 1-7****,** the stamped metal wireless charging coil comprises a series of parallel traces connected in a bifilar fashion. In other words, the wireless charging coil includes first and second coils that are parallel, closely spaced, and connected in series such that the first and second coils have parallel currents. The first and second coils could be stacked or planar and connected in series and/or parallel to meet performance requirements (e.g., electrical requirements, power requirements, etc.). The wireless charging coil could be used in any battery powered device, particularly in mobile devices (e.g., smartphones, tablets, watches, etc.). The wireless charging coil can be made to be Qi compliant, but could be adjusted to comply with any wireless transfer protocol. A wireless charging coil with a greater amount of conductive material, such as copper, can be positioned within a given space by varying (e.g., increasing) the thickness of the coil, which increases energy availability. Compared with other wireless charging coils, the wireless charging coils described herein exhibit an increased magnetic coupling effectiveness (e.g., magnetic field strength) and thereby transmit energy at a higher efficiency.

**FIG. 1** is a diagram showing processing steps **10** for manufacturing a wireless charging coil of the present disclosure. In step **12,** a metal sheet is stamped to form a first coil with tie bars. The metal sheet could be any of a variety of materials suitable for wireless power transfer (e.g., copper, copper alloy, aluminum, aluminum alloy, etc.). In step **14,** a metal sheet (e.g., the same metal sheet or a different metal sheet) is stamped to form a second coil with tie bars. In step **16,** the first coil is stamped to remove the tie bars. In step **18,** the second coil is stamped to remove the tie bars. In step **20,** the first and second coils are assembled together. In step **22,** the assembled coil is applied to a ferrite substrate. In step **24,** jumpers (e.g., leads) are attached to electrically connect the first and second coils in series (e.g., an inside end of the first coil is electrically connected to the outside end of the second coil via a jumper).

The steps described above could be interchanged, consolidated, or omitted completely. For example, the coils could be stamped without first forming tie bars, and/or the first and second coils could be applied directly to the ferrite (without being assembled first), etc. Additionally, the coil could be photo-chemically etched or machined instead of stamped, or made by any other suitable manufacturing process.

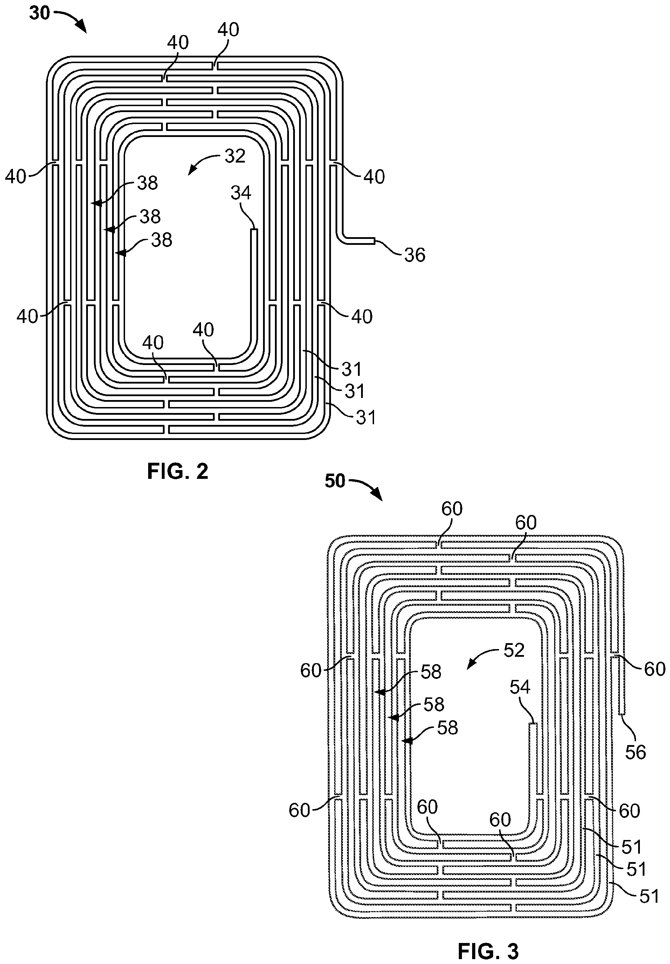

FIG. 2 is a view of a first stamped coil 30 with tie bars. The first coil 30 can be a generally rectangular planar spiral trace 31, although the trace 31 could form any suitable shape (e.g., circular planar spiral). The dimensions of the coil 30 could vary depending on the application of the coil 30 (e.g., as used in mobile devices, wearable devices, cars, etc.). The coil 30 could be of any suitable thickness, such as between 0.076 mm (0.003 in.) and 0.508 mm (0.020 in.), etc., but could be thicker for higher powered applications. The coil 30 could be of any suitable overall dimensions, such as between 6.35 mm (0.25 in.) and 101.6 mm (4 in.) in width and/or between 6.35 mm (0.25 in.) and 101.6 mm (4 in.) in height. The trace 31 could also be of any suitable dimensions. For example, the trace 31 could be between 0.127 mm (0.005 in.) and 6.35 mm (0.250 in.) in width. The dimensions could vary depending on physical and performance requirements of the mobile device (e.g., required frequency). The coil 30 could be made of any suitable material for wireless power transfer, such as, for example, copper, copper alloy, aluminum, aluminum alloy, tempered copper alloy (e.g., Cl 10), etc.

The trace 31 of the coil 30 revolves around a center any number of times (e.g., 5, 10, etc.), such as to comply with any inductive or resonant power requirements. The trace 31 spirals to form an inside portion 32 at the center of the coil 30. As a result, the coil 30 has an inside end 34 and an outside end 36. The spaces 38 between the trace 31 are configured to be wide enough (e.g., 0.7239 mm (0.0285 in.)) to accommodate the second stamped coil (described in more detail below). Tie bars 40 can be positioned at a plurality of locations throughout these spaces 38 to maintain the general shape of the coil 30 (e.g., prevent unwinding or deformation of the shape), such as during transportation of the coil 30 between locations or between stations. The outside end 36 could extend out at an angle, such as a generally ninety degree angle. The inside end 34 and outside end 36 can be disposed towards the same side of the coil 50, but could be at any of a variety of locations in the coil 50.

FIG. 3 is a view of a second stamped coil 50 with tie bars. The second coil 50 shares most of the same features and characteristics of the first coil shown in FIG. 2. The second coil 50 can be a generally rectangular planar spiral trace 51, although the trace 51 could form any suitable shape (e.g., circular planar spiral). The dimensions of the coil 50 could vary depending on the application of the coil 50 (e.g., as used in mobile devices, wearable devices cars, etc.). The coil 50 could be of any suitable thickness, such as between 0.076 mm (0.003 in.) and 0.508 mm (0.020 in.), etc., but could be thicker for higher powered applications. The coil 50 could be of any suitable overall dimensions, such as between 6.35 mm (0.25 in.) and 101.6 mm (4 in.) in width and/or between 6.35 mm (0.25 in.) and 101.6 mm (4 in.) in height. The trace 51 could also be of any suitable dimensions. For example the trace 51 could be between 0.127 mm (0.005 in.) and 6.35 mm (0.250 in.) in width. The dimensions could vary depending on physical and performance dimensions of the mobile device (e.g., required frequency). The coil 50 could be made of any suitable material for wireless power transfer, such as, for example, copper, copper alloy, aluminum, aluminum alloy, tempered copper alloy (e.g., Cl 10), etc.

The trace 51 of the coil 50 revolves around a center any number of times (e.g., 5, 10, etc.), such as to comply with any inductive or resonant power requirements. The trace 51 spirals to form an inside portion 52 at the center of the coil 50. As a result, the coil 50 has an inside end 54 and an outside end 56. The spaces 58 between the trace 51 are configured to be wide enough (e.g., 0.7239 mm (0.0285 in.)) to accommodate the first stamped coil 30 (described above). Tie bars 60 can be positioned at a plurality of locations throughout these spaces 58 to maintain the general shape of the coil 50 (e.g., prevent unwinding or deformation of the shape), such as during transportation of the coil 50 between locations or between stations. The outside end 56 does not extend out as with the first coil 30 (but could). The inside end 54 and outside end 56 can be disposed towards the same side of the coil 50, but could be at any of a variety of locations in the coil 50.

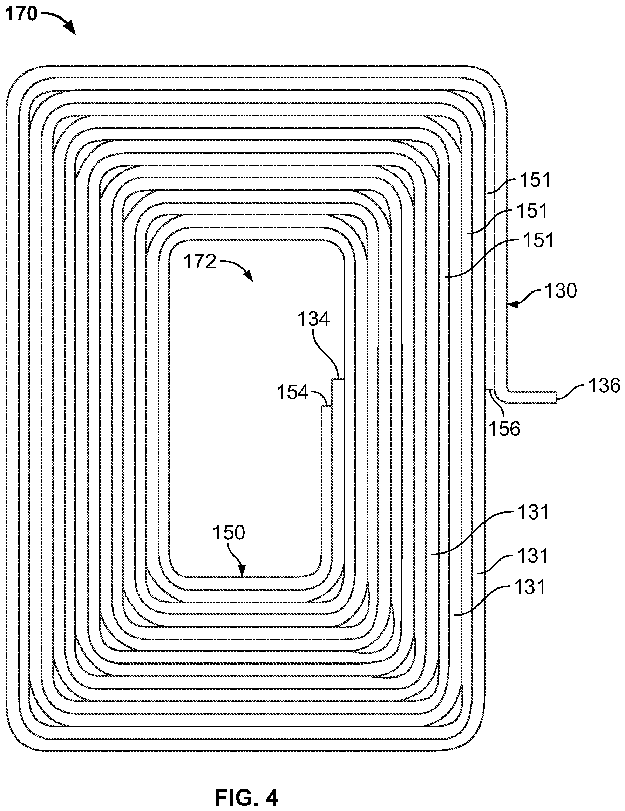

FIG. 4 is a view of an assembled coil 170 after the tie bars of the first and second stamped coils 130, 150 have been removed. As shown, the first and second coils 130, 150 fit into each other. More specifically, the first coil 130 fits into the space formed between the trace 151 of the second coil 150, and conversely, the second coil 150 fits into the space formed between the trace 131 of the first coil 130. However, when assembled, there are small gaps between the trace 131 of the first coil 130 and the trace 151 of the second coil 150 (e.g., 0.076 mm (0.003 in.), 0.102 mm (0.004 in.), etc.), as discussed below in more detail. As a result, together the first and second coils 130, 150 together form a parallel planar spiral. Also shown, the inside end 134 of the first coil 130 is adjacent to the inside end 154 of the second coil 150, and the outside end 136 of the first coil 130 is adjacent to the outside end 156 of the second coil 150. However, the ends could be any relative distance from one another. This stamping method could have an average space width variation of at least approximately 0.076 mm (0.003 in.) for the assembled coil 170. The maximum and minimum variance are dependent on the assembled coil 170 dimensions (e.g., overall height and width).

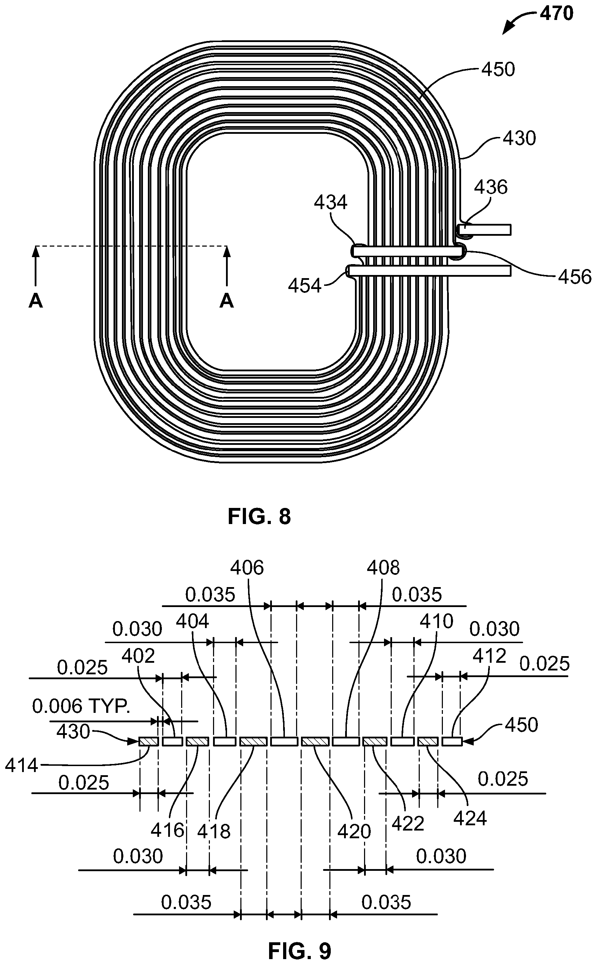

The tight tolerances and rectangular cross-sectional shape of the traces 130, 131 could result in a fill ratio (e.g., 85%) greater than current industry coils (e.g., 65%), such as wound coils, etched coils, etc. For example, the rectangular cross-sectional shape achieved from stamping (see FIG. 9 below) provides a potentially greater fill ratio than the circular cross-sectional shape of a round wire (e.g., round copper wire). More specifically, a 0.254 mm (0.010 in.) diameter insulated round wire (0.229 (0.009) diameter mm (in.) wire with 0.013 mm (0.0005 in.) insulation) could provide a 65% fill ratio, compared to a stamped coil with a rectangular cross section having a 0.152 (0.006) thickness and 0.076 (0.003) spacing gap. Further, the wireless charging coil 170 can operate under higher ambient temperatures than other current industry wires (e.g., Litz wire), and is not susceptible to degradation by vibration, shock, or heat. This is partly because the wireless charging coil 170 is made of a single-monolithic conductor (e.g., not a multi-strand wire). This can be compared to the individual strands of a Litz wire, which has insulation material separating each of the individual wire strands which cannot withstand higher temperatures.

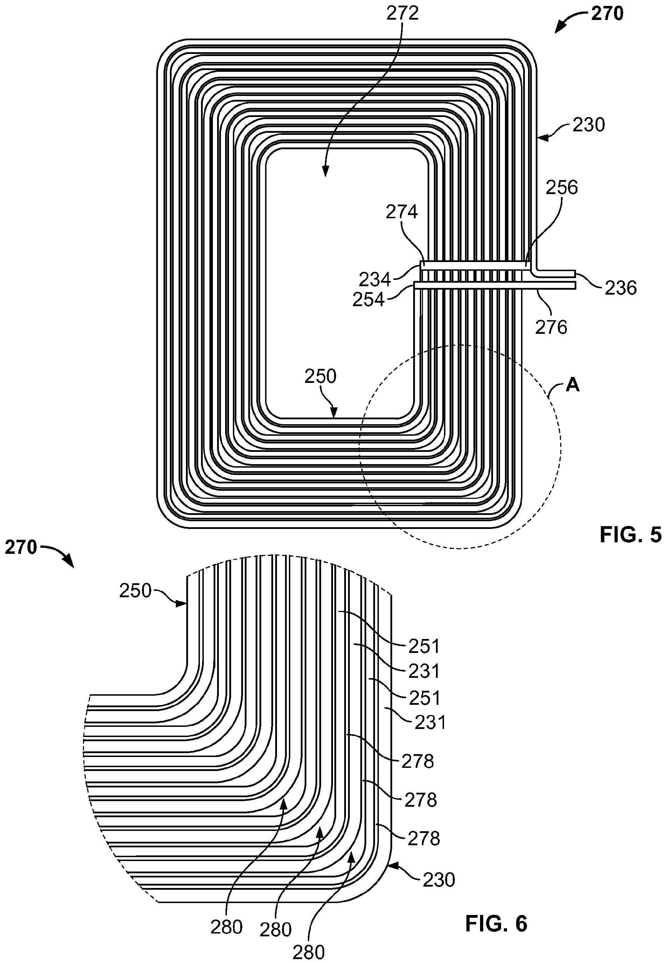

FIG. 5 is a view of the assembled wireless charging coil 270 with jumpers attached. Although not shown, a jumper could be attached to the first outside end 236. As shown, the inside end 234 of the first coil 230 is electrically connected to the outside end 256 of the second coil 250 by a first jumper 274. These ends 234, 256 are relatively proximate to one another, and disposed on the same side of the coil 270 to allow for a short jumper 274. A second jumper 276 is then used to electrically connect the inside end 254 of the second coil with the mobile device circuitry. The outside end 236 and inside end 254 are relatively proximate and disposed towards the same side of the coil 270, to provide for a short jumper 276 and for ease of electrical wiring with the electronic device. The result is a pair of parallel, closely spaced coils 230, 250 connected in series such that the first and second traces 230, 250 have parallel currents (e.g., the currents of each trace are in the same clockwise or counterclockwise direction).

When fully assembled with the other components of the electronic device, the inside portion 272 of the assembled coil 270 is insulated (e.g., by plastic and glue) to ensure proper performance. The assembled wireless charging coil 270 can have any number of windings, depending upon electrical requirements. The wireless charging coil 270 could be used in any battery powered device, such as smartphones. The assembled coil 270 could be of any suitable overall dimensions (e.g., 29.007 mm (1.142 in.) width and 37.008 mm (1.457 in.) height, etc.). The coil length could be of any suitable length (e.g., 123.086 cm (48.459 in.)).

FIG. 6 is a close up view of portion A of FIG. 5. As shown, there are very small gaps 278 (e.g., voids) between the trace 231 of the first coil 230 and the trace 251 of the second coil 250 (e.g., 0.003 in., 0.004 in., etc.), although there could be increased gaps 280 at the corners to account for the bends in the traces 231, 251 (e.g., such that the gap increase alternates). These tight tolerances could result in a fill ratio greater than current industry methods.

The assembled wireless charging coil 270 could provide direct current (DC) resistance
(ohms), alternating current (AC) resistance, and/or AC/DC resistance ratios at a number of different values depending on the dimensions of the charging coil 270 and material(s) used in construction of the charging coil. The values could be adjusted to achieve high AC/DC ratios to meet induction standards. The coil dimensions could be varied to achieve varying resistance depending on the performance characteristics required. For example, for a resistance of 0.232 ohms using CI 10 alloy, the traces 230, 250 could have a cross section of 0.0796127 mm² (0.0001234 in.²) (e.g., 0.127 mm (0.005 in.) thickness and 0.6248 mm (0.0246 in.) width, or 0.102 mm (0.004 in.) thickness and 0.7823 mm (0.0308 in.) width, etc.), and for a resistance of 0.300 ohms using CI 10 alloy, the traces 230, 250 could have a cross section of 0.0614837 mm² (0.0000953 in.²) (e.g., 0.127 mm (0.005 in.) thickness and 0.483 mm (0.019 in.) width, or 0.102 mm (0.004 in.) thickness and 0.6045 mm (0.0238 in.) width, etc.). The stamped wireless charging coil 270 can achieve a high trace thickness and/or high overall aspect ratio compared to other current industry methods (e.g., printed circuit board (PCB) etched coils).

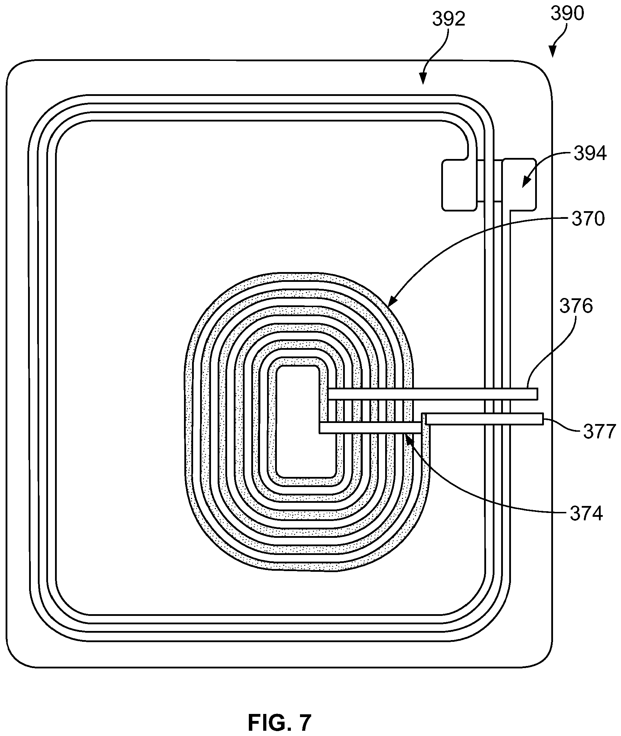

FIG. 7 is a view of an electrical component assembly 390 including a wireless charging coil 370. More specifically, the wireless charging coil 370 is attached to ferrite substrate 392 and in conjunction with a near field communication (NFC) antenna 394 having contact paddles. The wireless charging coil 370 and NFC antenna 394 could have contact pads (e.g., gold) to connect the wireless charging coil 370 and NFC antenna 394 to the circuitry of the mobile device. The assembly comprises a first jumper 374, a second jumper 376, and a third jumper 377 connecting the various ends of the coil 370, as explained above in more detail. There could be a film (e.g., clear plastic) over the wireless charging coil 370 and NFC antenna 394, with the jumpers 374, 376, 377 on top of the film and only going through the film at the points of connection. This prevents accidentally shorting any of the electrical connections of the coil **370.** Alternatively, the jumpers **374, 376, 377** could be insulated so that a film is not needed. To minimize space, the wireless charging coil **370** is within the NFC antenna **394** with jumpers **376, 377** that extend to the outside of the NFC antenna **394.** However, the wireless charging coil **370** and jumpers **376, 377** could be placed at any location relative to the NFC antenna **394.**

The total thickness of the assembly could vary depending on various potential needs and requirements. For example, the jumpers could be 0.05-0.08 mm thick, the film could be 0.03 mm thick, the NFC antenna **394** and coil **370** could be 0.08 mm thick, and the ferrite **392** could be 0.2 mm thick for a total wireless charging coil thickness of approximately 0.36 mm.

**FIG. 8** is a schematic view of an assembled wireless charging coil **470** with planar bifilar coils. As discussed above, the wireless charging coil **470** includes a first coil **430** (e.g., trace) and a second coil **450** (e.g., trace). The assembled coil **470** is manufactured and operates in the manner discussed above with respect to **FIGS. 1-7****.** The first coil **430** and the second coil **450** can have any desired thickness, such as to meet different power requirements. The first coil **430** and second coil **450** could be connected in series or parallel.

The width of the first and/or second coil **430, 450** could vary along the length of the coil to optimize performance of the assembled wireless charging coil **470.** Similarly, the thickness of the first and second coils **430, 450** could change over the length of the coil. For example, the width (and/or thickness) of the first coil **430** could gradually increase (or narrow) from a first end **434** towards a middle of the coil **430,** and the width (and/or thickness) could likewise gradually narrow (or increase) from the middle to the second end **436** of the coil **430** (e.g., a spiral coil of wide-narrow-wide), thereby varying the cross-sectional area throughout. Any variation of width (e.g., cross-section) or thickness could be used, and/or these dimensions could be maintained constant over portions of the coil, according to desired performance characteristics .

Additionally (or alternatively), the spaces between the windings of the coil could be varied to optimize performance of the wireless charging coil **470.** For example, the gap width between the traces could be wider towards the outside of the first coil **430** and narrower towards the inside of the first coil **430** (or the opposite). Similarly, the distance between the first coil **430** and second coil **450** in the assembled coil **470** could also be varied to optimize performance. Further, the geometry of the edges of the coil could be varied (e.g., scalloped, castellated, etc.), such as to reduce eddy currents.

FIG. 9 is a cross-sectional view of a portion of the wireless charging coil of FIG. 8. The first coil 430 comprises sections 414-424 and the second coil 450 comprises sections 402-412. As shown, the cross-section of the first coil 430 becomes gradually wider and then narrower from a first end to a second end of the first coil 430. As a result, sections 414 and 424 are the narrowest (e.g., 0.635 mm (0.025 in.)), followed by sections 404 and 422 (e.g., 0.762 mm (0.030 in.)), and sections 418 and 420 are the widest (e.g., 0.889 mm (0.035 in.)). In the same way, the cross-section of the second coil 450 becomes gradually wider and then narrower from a first end to a second end of the second coil 450. As a result, sections 402 and 412 are the narrowest, and sections 406 and 408 are the widest. Changes in the dimensions of the cross section of the antenna can likewise be varied in other manners.

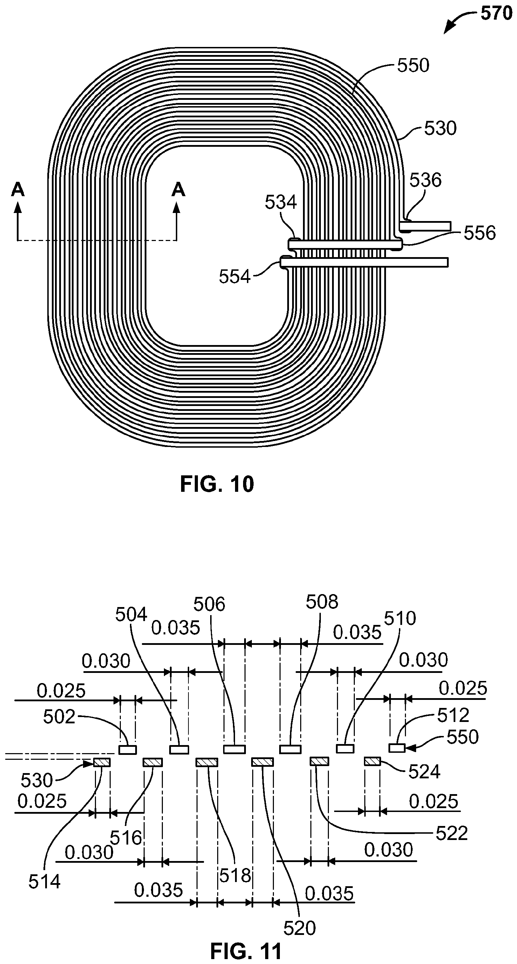

FIG. 10 is a schematic view of an assembled wireless charging coil 570 with stacked bifilar coils. As discussed above, the wireless charging coil 570 includes a first coil 530 and a second coil 550. The assembled coil 570 is manufactured and operates in the manner discussed above with respect to FIGS. 1-7, as well as that discussed in FIGS. 8-9, except that the first and second coils 530, 550 are stacked instead of planar. The first coil 530 includes a first end 534 and a second end 536, and the second coil 550 includes a first end 554 and a second end 556. Further, varying the skew or offset (e.g., stacking distance) of the first coil 530 relative to the second coil 550 can affect the performance of the wireless charging coil 570. The first coil 530 and second coil 550 could be connected in series or parallel.

FIG. 11 is a cross-sectional view of a portion of the wireless charging coil of FIG. 10. This coil 570 is similar to that of FIGS. 8-9, including a first coil 530 with sections 514-524 and a second coil 550 with sections 502-512, except that the first and second coils 530, 550 are stacked instead of planar.

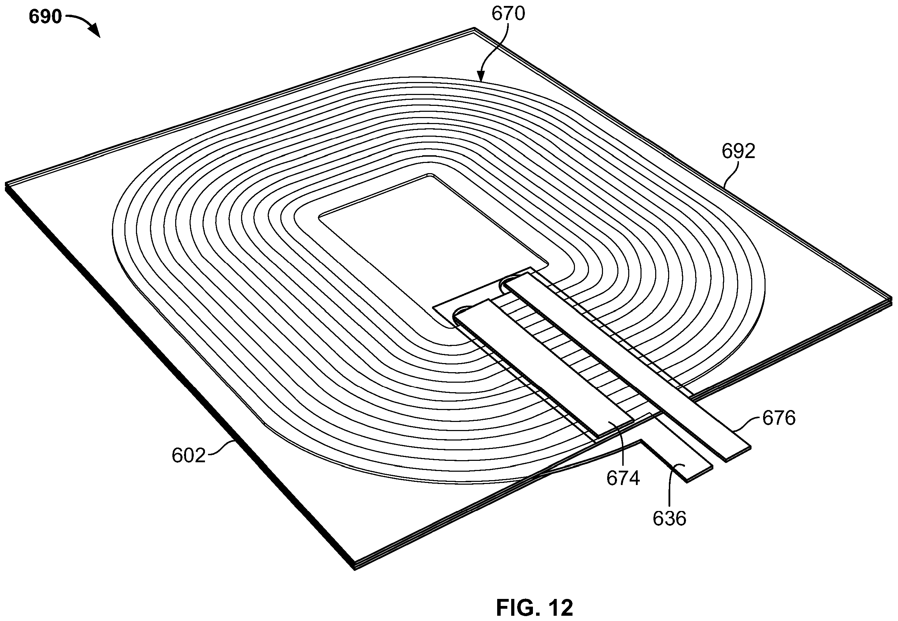

FIGS. 12-13 are views showing an electrical component assembly 690. More specifically, FIG. 12 is a perspective view of an electrical component assembly 690. The electrical component assembly 690 comprises a ferrite shield 692, a pressure sensitive adhesive (PSA) layer 602 positioned on the ferrite shield 692, an assembled coil 670 (e.g., bifilar coil) positioned therebetween, and jumpers 674, 676 positioned on the PSA layer 602.

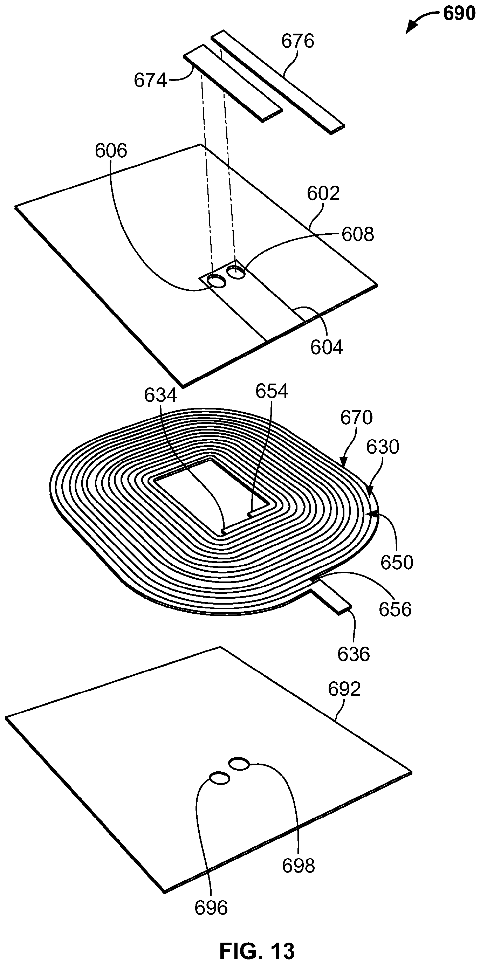

**FIG. 13** is an exploded view of the electrical component assembly **690** of **FIG. 12****.** The bifilar coil **670** includes a first coil **630** having an inside end **634** and an outside end **636** interconnected with a second coil **650** having an inside end **654** and an outside end **656.** The inside and outside ends are on the same side of the assembled coil **670** for ease of use and assembly (e.g., minimize the distance to electrically connect the ends).

Ferrite shield **692** includes a first hole **696** and a second hole **698** positioned to correlate with the placement of the inside end **634** of the first coil **630** and the inside end **654** of the second coil **650** (e.g., when the coil **670** is placed onto the ferrite shield **692.** Although holes **696, 698** are shown as circular, any shape and size openings could be used (e.g., one rectangular opening, etc.). These holes **696, 698** facilitate assembly and welding of the electrical component assembly **690.**

PSA layer **602** and ferrite shield **692** are similarly sized to one another, and although shown as rectangular, both could be of any shape (e.g., circular). PSA layer secures the relative placement of the assembled coil **670** to the ferrite shield **692.** PSA layer **602** could have adhesive on one or both sides, and could include a polyethylene terephthalate (PET) film area **604** free of adhesive on one or both sides. PET film area **604** facilitates assembly and welding of the electrical component assembly **690**

PSA layer **602** includes a first hole **606** and a second hole **608** in the PET film area **608** which correlate in position with the placement of the inside end **634** of the first coil **630** and the inside end **654** of the second coil **650** (as well as the first hole **696** and second hole **698** of the ferrite substrate **692**). Although holes **606, 608** are shown as circular, any shape and size openings could be used (e.g., one rectangular opening). Holes **606, 608** provide access through the PSA layer **602** to electrically connect jumpers **674, 676** with the inside ends **634, 654** of the assembled coil **670.** The PET film area **604** facilitates attachment of the jumpers **674, 676** to the assembly **690.**

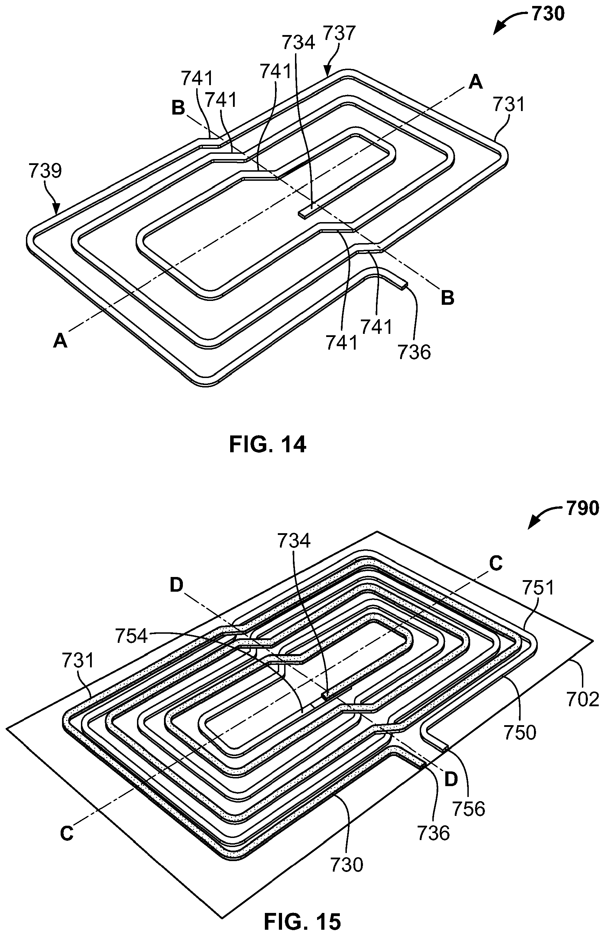

**FIG. 14** is a perspective view of a resonant coil **730.** Resonant coil **730** could be a generally rectangular planar spiral trace **731,** although the trace **731** could form any suitable shape. The resonant coil **730** includes an inside end **734** and an outside end **736.** The trace **731** is stamped on a strip or sheet of metal (e.g., copper, aluminum, etc.). The dimensions of the coil **730** could vary depending on the application of the coil **730.** The coil **730** could be of any suitable thickness, and of any suitable overall dimensions. The trace **731** could also be of any suitable dimensions. The dimensions could vary depending on physical and performance requirements. The coil 730 could be made of any suitable material for wireless power transfer, such as, for example, copper, copper alloy, aluminum, aluminum alloy, tempered copper alloy (e.g., Cl 10), etc. The gaps between the windings of the trace 731 are larger for a resonant coil than for other types of inductive coils due to performance requirements.

Stamping provides a scalable process for high volume production with high yields. The stamped trace 731 is not prone to unwinding and can allow for a thicker trace. This is advantageous compared with other existing technologies. For example, winding wire (e.g., copper) to a specific pattern on a surface is difficult and the wound wire can unwind. Further, etched copper is expensive and could be limited to a maximum thickness (e.g., 0.102 mm (0.004 in.) thick).

The trace 731 of the resonant coil 730 includes a first side 737 and a second side 739 offset from the first side 737 by angled portions 741 of the trace 731. The angled portions 741 are aligned with one another (e.g., occur along line B-B), and angled in the same direction. In other words, angled portions 741 are all angled toward a particular side of the coil 730 (e.g., towards one side of line A-A), such that a first portion 737 (e.g., upper portion) of the coil 730 is shifted relative to a second portion 739 (e.g., lower portion) of the coil 730.

FIG. 15 is a perspective view of a resonant coil assembly 790, including the first resonant coil 730 from FIG. 14. The resonant coil assembly 790 includes a first coil 730 and a second coil 750, which are identical to one another (which minimizes manufacturing costs). The resonant coil assembly 790 could be laminated such that the first coil 730 and second coil 750 are laminated to a film 702 (e.g., PET film), such as by an adhesive (e.g., heat activated, pressure sensitive, etc.) to provide more stability in downstream operations. The first coil 730 could be adhered to one side of the film 702 and the second coil 750 could be adhered to the opposite side of the film 702.

The first coil 730 includes an outside end 736 and an inside end 734, and the second coil 750 includes an outside end 756 and an inside end 754. The first coil 730 and second coil 750 could be exactly the same size and shape coil, except that the second coil 750 is rotated 180 degrees about line D-D. In this way, the trace 731 of the first coil 730 is positioned between the gap formed by the windings of the trace 751 of the second coil 750 (and vice-versa), except at the angled portions of each coil along line D-D, where the traces cross one another. The inside end **734** of the first coil **730** could be adjacent to (and in electrical connection with) the inside end **754** of the second coil **750,** and the outside end **736** of the first coil **730** could be adjacent to the outside end **756** of the second coil **750.**

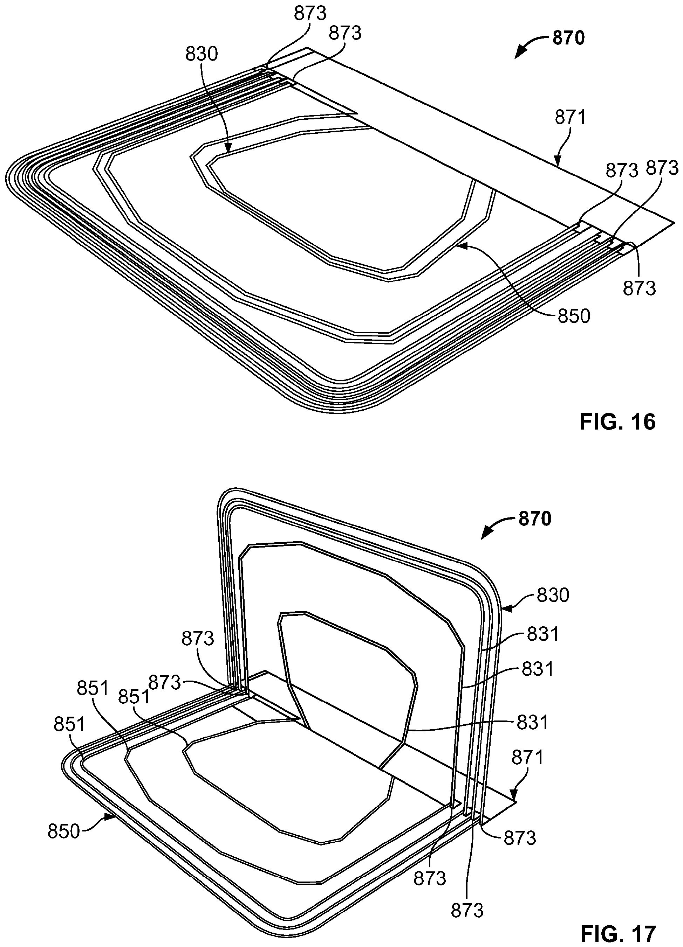

**FIGS. 16-18** are views of a stamped resonant coil **870.** **FIG. 16** is a perspective view of a folded stamped resonant coil **870.** The coil **870** comprises connector sheet **871,** a first set of traces **831** of a first coil portion **830** with ends thereof connected to an edge of the connector sheet **871** at connection points **873,** and a second set of traces **851** of a second coil portion **850** with ends thereof connected to the same edge of the connector sheet **871** at connection points **873.** To create the stamped resonant coil **870,** a (single) sheet of metal is stamped to form the first set of traces **831** and the second set of traces **851** (e.g., such that the arcs of each trace of the first and second sets of traces **831, 851** are oriented in the same direction). The ends of the first and second set of traces **831, 851** are then connected to the same edge of connector sheet **871** (e.g., insulation material). The connector sheet **871** facilitates wiring of the sets of traces **831, 851** to each other, as well as facilitates the connection of the stamped resonant coil **870** to electronic circuitry. The ends of the first and second set of traces **831, 851** are then wired to each other, such as by using a series of jumpers and/or traces. For example, the jumpers and/or traces could be in the connector sheet **871** and could run parallel to the connector sheet (and perpendicular to the first and second sets of traces **831, 851**).

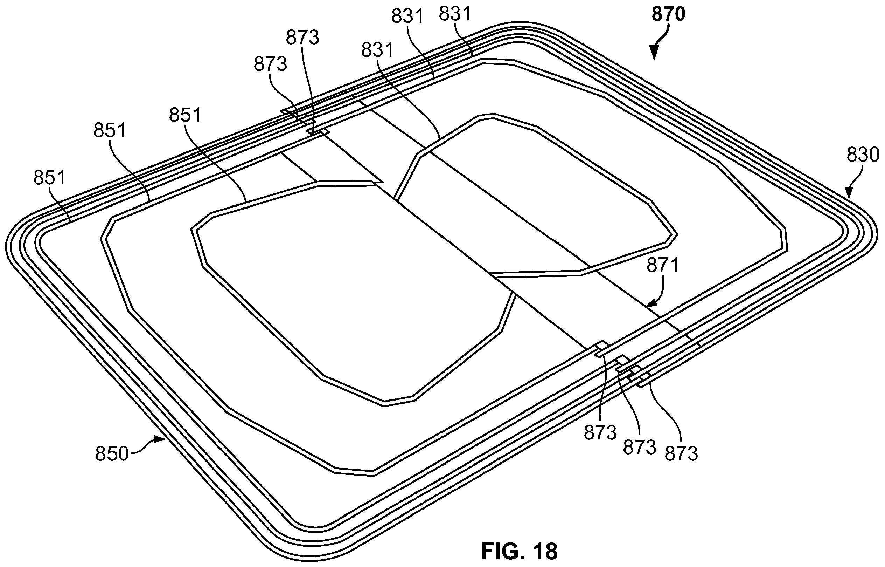

**FIG. 17** is a perspective view of the coil **870** of **FIG. 16** partially opened. As shown, the first set of traces **831** of the first coil portion **830** are bent at connection points **873.** **FIG. 18** is a perspective view of the coil **870** of **FIG. 16** fully opened. As shown, the first set of traces **831** of the first coil portion **830** continue to be bent at connection points **873** until the first coil portion **830** is planar with the second coil portion **850.** Bending of the traces could result in fracturing on the outside surface thereof, in which case, ultrasonic welding could be used to ensure electrical conductivity. Alternatively, the first and second sets of traces **831, 851** could connect to opposing edges of the connector sheet **871,** such that bending could not be required. Stamping (and bending) in this way reduces the amount of scrap generated, thereby increasing material utilization.

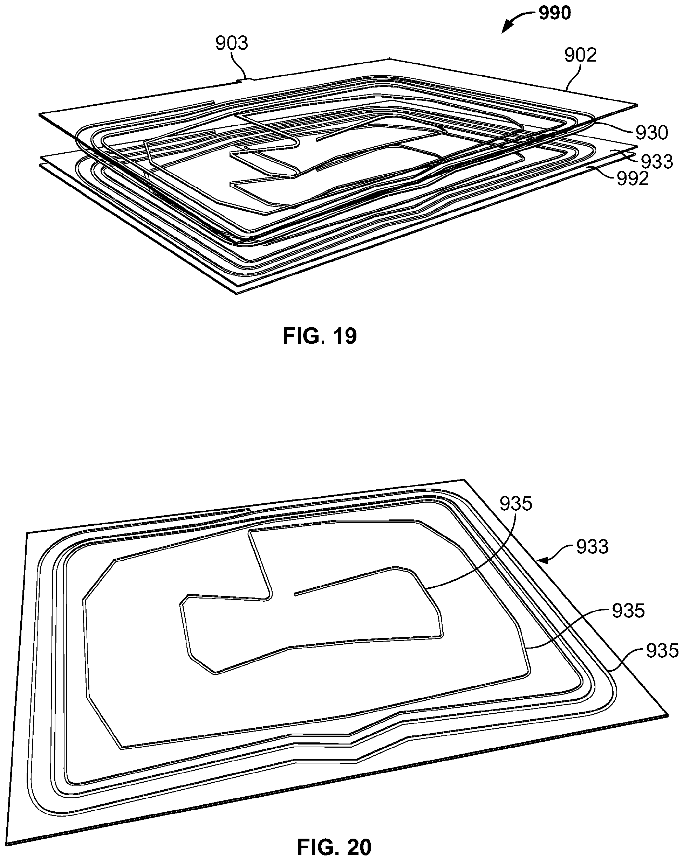

FIG. 19 is an exploded view of a low profile electrical component assembly 990. More specifically, the low profile electrical component assembly 990 comprises a substrate 992 (e.g., PET layer), a filler material layer 933 (e.g., rubber, foam, durometer, etc.), a coil 930 (e.g., resonant coil), and a protective layer 902. The protective layer 902 could be partly translucent and could comprise a tab (e.g., for applying or removing).

FIG. 20 is a perspective view of the filler material 933 of FIG. 19. Filler material 933 comprises grooves 935 which correspond in size and shape to that of the coil 930. In this way, the coil 930 is nested in filler material 933, which protects the coil shape from bending and/or deformation. Such an assembly facilitates handling of the coil 930 for subsequent operations.

FIG. 21 is a diagram showing processing steps 1000 for manufacturing a wireless charging coil with adhesive (e.g., glue). In step 1002, a metal sheet is stamped to form a first coil with tie bars. In step 1004, a metal sheet is stamped to form a second coil with tie bars. In step 1006, a first coil is applied to a first laminate (e.g., plastic substrate, Transilwrap) with an adhesive layer to adhere thereto. In step 1008, a second coil is applied to a second laminate (e.g., plastic substrate, Transilwrap) with an adhesive layer to adhere thereto. In step 1010, the first coil is stamped to remove tie bars. In step 1012, the second coil is stamped to remove tie bars. Accordingly, the first coil and second coil are fixed in place as a result of the adhesive layer on the plastic laminate. In step 1014 the first coil with the laminate adhered thereto, is assembled with the second coil with the laminate adhered thereto. More specifically, as discussed above, the first coil with a spiral trace fits into the space formed between a trace of a second coil , and conversely, the second coil fits into the space formed between the trace of the first coil, thereby forming an assembled coil. As a result, the assembled coil is positioned between (e.g., sandwiched between) the first laminate and the second laminate.

In step 1016, a heat press is applied to the assembled coil to displace and set the adhesive layer from the first and second laminates. More specifically, the heat applied should be hot enough to melt the adhesive (e.g., more than 104-121 °C (220-250 °F)), but not hot enough to melt the plastic laminate. The pressure applied pushes the first coil towards the second laminate, such that the adhesive of the second laminate positioned in between the trace of the second coil is displaced and forced between the spaces between the first trace of the first coil and the second trace of the second coil. Squeezing the first and second coils together (e.g., with heat and/or pressure) migrates the adhesive to the spaces in between the traces (e.g., to insulate them from one another). This covers or coats the traces of the first coil and the second coil, and bonds the first coil to the second coil. The pressure, heat, and duration could vary depending on the desired cycle time for manufacturing the assembled coil. It is noted that such a process could result in a planar offset of the first coil from the second coil when assembled together.

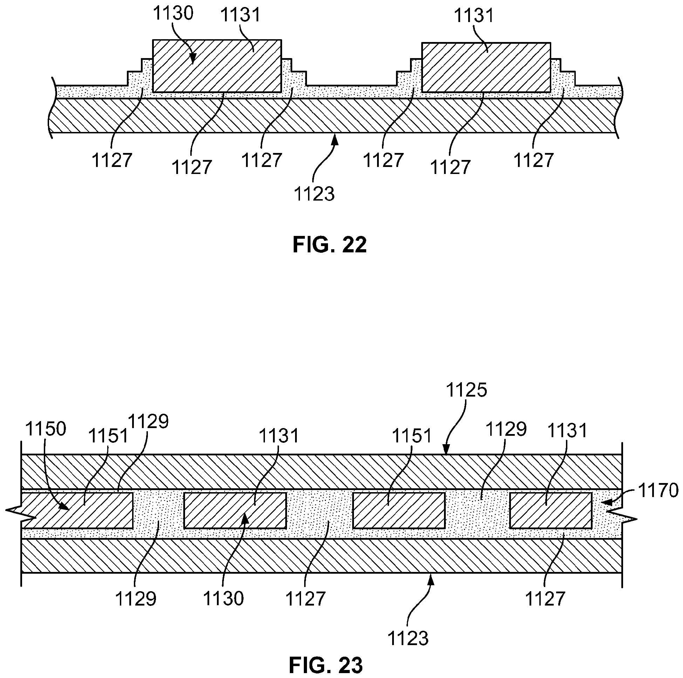

FIG. 22 is a partial cross- sectional view of a first stamped coil 1130 when applied to a first laminate 1123. The first laminate 1123 includes an adhesive layer 1127 applied to a surface thereof. When the first stamped coil 1130 is applied to the first laminate 1123, some of the adhesive 1127 is displaced to the sides, such that the displaced adhesive 1127 accumulates against the sides of the trace 1131 of the first stamped coil 1130. Accordingly, the adhesive 1127 on the sides and underneath the trace 1131 of the first stamped coil 1130 prevents the trace 1131 from moving relative to the first laminate 1123.

FIG. 23 is a partial cross-sectional view of an assembled coil positioned between a first laminate 1123 and second laminate 1125. As described above, when assembled, the first coil 1130 with a first trace 1131 fits into the space formed between a second trace 1151 of a second coil 1150, and conversely, the second coil 1150 fits into the space formed between the first trace 1131 of the first coil 1130, thereby forming an assembled coil 1170. As a result, the assembled coil 1170 is positioned between (e.g., sandwiched between) the first laminate 1123 and the second laminate 1125. This displaces the first adhesive 1127 between the first trace 1131 of the first coil 1130, and displaces the second adhesive 1129 between the second trace 1151 of the second coil 1150.

When the first and second adhesive layers 1127, 1129 are set (e.g., by pressure and/or heat), the adhesive covers the surface of the traces 1131, 1151 (e.g., by melting), and acts as an insulator and stabilizer for the traces 1131, 1151. In other words, the first and second coils 1130, 1150 are bonded together. This prevents relative movement of the traces 1131, 1151, which prevents the first stamped coil 1130 from contacting the second stamped coil 1150 and shorting out the assembled coil 1170. As an example, the first and second stamped coils 1130, 1150 could each be 0.3175 mm (0.0125 in.) thick, and each adhesive layer 1127, 1129 could be 0.1397 mm (0.0055 in.) thick, for a total thickness of 0.5715 mm (0.0225 in.). After pressure and/or heat have been applied, the total thickness could be 0.5207 mm (0.0205 in.), with a total adhesive displacement of 0.051 mm (0.002 in.).

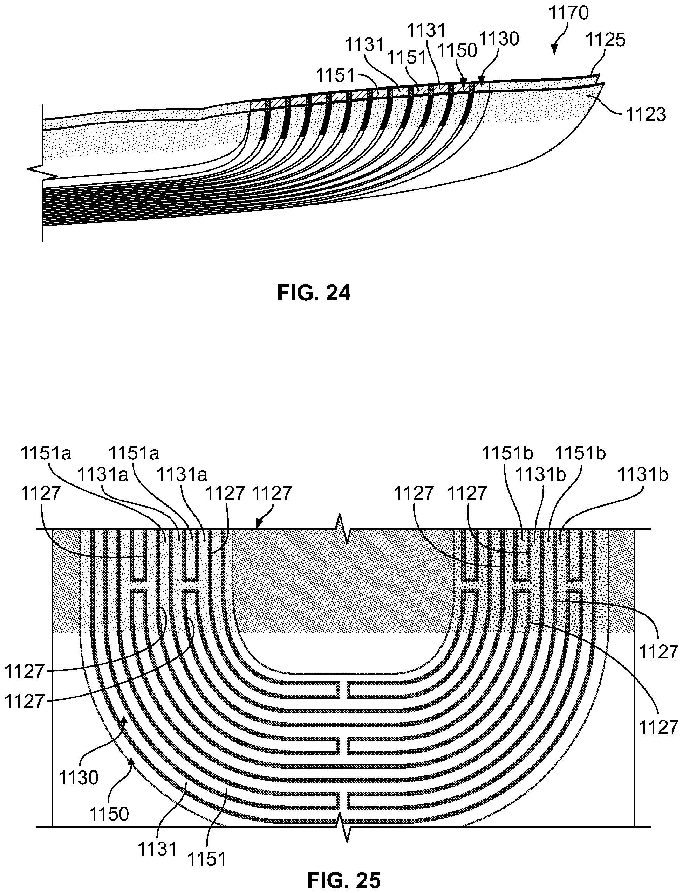

**FIGS. 24-25** are partial views of an assembled coil **1170.** More specifically, **FIG. 24** is partial cross-sectional view of an assembled coil **1170,** and **FIG. 25** is a partial top view of the assembled coil **1170** of **FIG. 24****.** The assembled coil **1170** comprises (as discussed above) a first coil **1130** with a spiral trace **1131,** which fits into the space formed between a trace **1151** of a second coil **1150,** and conversely, the second coil **1150** fits into the space formed between the trace **1131** of the first coil **1130.** Accordingly, the first and second coils **1130, 1150** form a parallel planar spiral.

As discussed above, a first laminate **1123** (e.g., Transilwrap) with a first adhesive layer is applied to the first stamped coil **1130,** and a second laminate **1125** (e.g., Transilwrap) with a second adhesive layer applied to the second stamped coil **1150.** As a result, the first and second stamped coils **1130, 1150** are positioned between the first and second laminates **1123, 1125.** When the first and second coils **1130, 1150** are assembled with one another, the adhesive **1127** (dyed black for clarity) is displaced to fill the spaces between the first and second traces **1131, 1151.**

**FIG. 25** shows the displacement of adhesive **1127** when the first coil **1130** and second coil **1150** are assembled. More specifically, the adhesive **1127** (dyed black for clarity) is shown between the first trace **1131** and the second trace **1151.** Further, in the particular example shown, more pressure has been exerted on the left side first and second traces **1131a, 1151a,** than the right side traces **1131b, 1151b.** As a result, less adhesive **1127** has been displaced on the right side than the left side, thereby making the right side trace **1151b** less visible than the left side trace **1151a** (as a result of the black dyed adhesive **1127**).

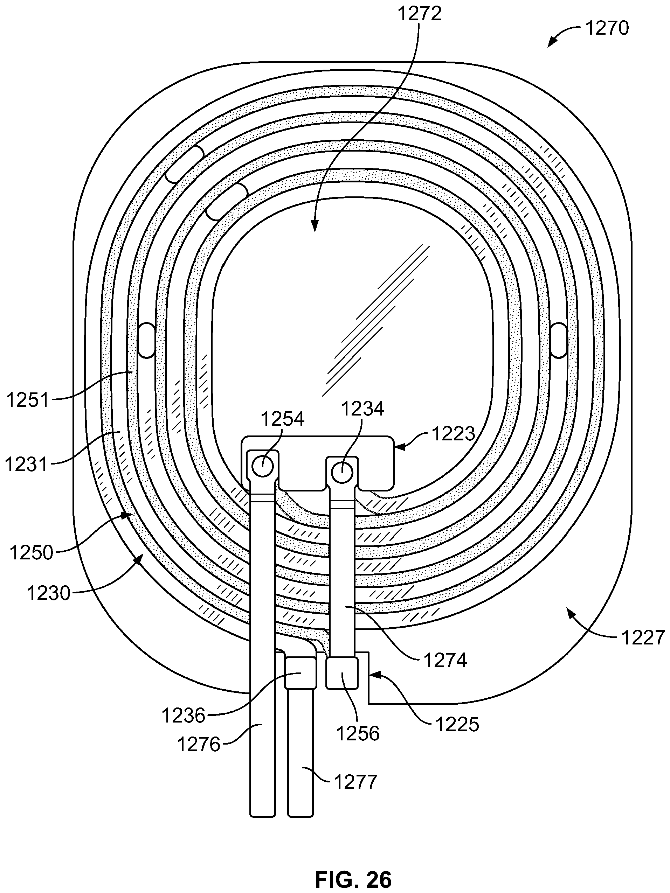

**FIG. 26** is a top view of an assembled coil **1270** of the present disclosure. As discussed above, the assembled coil **1270** comprises a first coil **1230** with a first spiral trace **1231** having an inside end **1234** and an outside end **1236,** a second coil **1250** with a second spiral trace **1251** having an inside end **1254** and an outside end **1256,** a first jumper **1277** attached to the outside end **1236** of the first coil **1230,** a second jumper **1274** attached to the inside end **1234** of the first coil **1230** and the outside end **1256** of the second coil **1250,** and a third jumper **1276** attached to the inside end **1254** of the second coil **1250.** The first and second spiral coils **1230, 1250** forming an inside portion **1272.**

A laminate **1227** (e.g., film, adhesive film, plastic film, etc.) covers the assembled coil **1270** including the inside portion **1272.** As explained above, the adhesive layer of the laminate **1227** stabilizes the first coil **1230** and second coil **1250** and insulates them. This prevents relative movement of the first and second coil **1230, 1250** and prevents the first and second coils **1230, 1250** from accidentally contacting one another and shorting out the assembled coil **1270**

The laminate **1227** could define one or more cutouts. More specifically, the laminate **1227** could define an inside cutout **1223** to provide access to (e.g., expose) the first inside end **1234** of the first coil **1230** and the second inside end **1254** of the second coil **1250.** The laminate **1227** could also define an outside cutout **1225** to provide access to (e.g., expose) the first outside end **1236** of the first coil **1230** and the second outside end **1256** of the second coil **1250.** The first cutout **1223** could extend to substantially of the inside portion **1272.** The assembled coil **1270** (and the first and second coils **1230, 1250** thereof) could be of any material and/or style (e.g., A6 style coil).

For any of the embodiments discussed above, the wireless charging coil (e.g., bifilar coil) could be constructed and then (e.g., at a different location and/or time) the first and second coils of the wireless charging coil, whether stacked or planar, could be electrically connected to each other in series or parallel depending on electrical requirements.

Having thus described the system and method in detail, it is to be understood that the foregoing description is not intended to limit the scope of protection, which is defined by the following claims.

## Claims

1. A wireless charging coil comprising:
a first stamped coil (1130) having a first spiral trace (1131), the first spiral trace defining a first space between windings; and
a second stamped coil (1150) having a second spiral trace (1151), the second spiral trace defining a second space between windings,
the first stamped coil and second stamped coil in co-planar relation, the first stamped coil positioned within the second space of the second stamped coil, and the second stamped coil positioned within the first space of the first stamped coil, the first and second coils electronically connected; and
wherein the wireless charging coil further comprises a first laminate (1123) applied to the first stamped coil with a first adhesive (1127) to adhere the first laminate to the first stamped coil; and **characterized by**
a second laminate (1125) applied to the second stamped coil with a second adhesive (1129) to adhere the second laminate to the second stamped coil; and
wherein the first laminate and the second laminate sandwich the coils with the second adhesive positioned between the first spiral trace (1131) of the first stamped coil (1130) and the second spiral trace (1151) of the second stamped coil (1150) to bond the coils together and to insulate the coils.

2. The wireless charging coil of Claim 1, wherein the first stamped coil and the second stamped coil are positioned between the first laminate and the second laminate.

3. The wireless charging coil of Claim 1, wherein the first stamped coil and second stamped coil are connected in series.

4. The wireless charging coil of Claim 1, wherein the first stamped coil and second stamped coil are connected in parallel.

5. The wireless charging coil of Claim 1, wherein the first stamped coil includes an inside end and an outside end, the inside end disposed on the same side of the first stamped coil as the outside end.

6. The wireless charging coil of Claim 5, further comprising a first jumper attached to the outside end of the first coil.

7. The wireless charging coil of Claim 6, wherein the second stamped coil includes an inside end and an outside end, and further comprising a second jumper attached to the inside end of the first coil and the outside end of the second coil.

8. The wireless charging coil of Claim 7, further comprising a third jumper attached to the inside end of the second coil.

9. A method of making a wireless charging coil comprising:
stamping a metal sheet to form a first coil (1130) having a first spiral trace (1131), the first spiral trace defining a first space between windings;
applying the first stamped coil to a first laminate (1123) via a first adhesive (1127) thereof;
stamping a metal sheet to form a second coil (1150) having a second spiral traced (1151), the second spiral trace defining a second space between windings;
applying the second stamped coil to a second laminate (1125) via second adhesive (1129) thereof;
interpositioning the first stamped coil and the second stamped coil to form a planar coil assembly with the first stamped coil positioned within the second space of the second stamped coil, and the second stamped coil positioned within the first space of the first stamped coil, and the first stamped coil and the second stamped coil positioned between the first and second laminates;
heating and pressing the planar coil assembly to displace and set the adhesives of the first and second laminates to surround and bond together the first and second coils.

10. The method of Claim 9, wherein heat applied by the heat press melts the adhesives but does not melt the laminate.

11. The method of Claim 10, wherein pressure applied by the heat press displaces and forces the adhesives between the first trace of the first coil and the second trace of the second coil to insulate the coils.

12. The method of Claim 9, wherein stamping the metal sheet forms the first coil with tie bars.

13. The method of Claim 12, further comprising stamping the first coil to remove the tie bars.

14. The method of Claim 9, wherein the first stamped coil and second stamped coil are connected in series.

15. The method of Claim 9, wherein the first stamped coil and second stamped coil are connected in parallel.

16. The method of Claim 9, wherein the first stamped coil includes an inside end and an outside end, the inside end disposed on the same side of the first stamped coil as the outside end.

17. The method of Claim 16, further comprising a first jumper attached to the outside end of the first coil.

18. The method of Claim 17, wherein the second stamped coil includes an inside end and an outside end, and further comprising a second jumper attached to the inside end of the first coil and the outside end of the second coil.

19. The method of Claim 18, further comprising a third jumper attached to the inside end of the second coil.

## Patentansprüche

1. Drahtlosladespule, umfassend:
eine erste gestanzte Spule (1130), die eine erste spiralförmige Bahn (1131) aufweist, wobei die erste spiralförmige Bahn einen ersten Raum zwischen Wicklungen definiert; und
eine zweite gestanzte Spule (1150), die eine zweite spiralförmige Bahn (1151) aufweist, wobei die zweite spiralförmige Bahn einen zweiten Raum zwischen Wicklungen definiert,
wobei die erste gestanzte Spule und die zweite gestanzte Spule in komplanarer Beziehung stehen, die erste gestanzte Spule innerhalb des zweiten Raums der zweiten gestanzten Spule positioniert ist, und die zweite gestanzte Spule innerhalb des ersten Raums der ersten gestanzten Spule positioniert ist, wobei die erste und die zweite Spule elektronisch verbunden sind; und
wobei die Drahtlosladespule weiter einen ersten Schichtstoff (1123) umfasst, der mit einem ersten Klebstoff (1127) auf der ersten gestanzten Spule aufgebracht ist, um den ersten Schichtstoff an die erste gestanzte Spule zu kleben; und **gekennzeichnet durch**
einen zweiten Schichtstoff (1125), der mit einem zweiten Klebstoff (1129) auf der zweiten gestanzten Spule aufgebracht ist, um den zweiten Schichtstoff an die zweite gestanzte Spule zu kleben; und
wobei der erste Schichtstoff und der zweite Schichtstoff die Spulen mit dem zweiten Klebstoff zwischen der ersten spiralförmigen Bahn (1131) der ersten gestanzten Spule (1130) und der zweiten spiralförmigen Bahn (1151) der zweiten gestanzten Spule (1150) positioniert sandwichartig einfassen, um die Spulen miteinander zu verkleben und die Spulen zu isolieren.

2. Drahtlosladespule nach Anspruch 1, wobei die erste gestanzte Spule und die zweite gestanzte Spule zwischen dem ersten Schichtstoff und dem zweiten Schichtstoff positioniert sind.

3. Drahtlosladespule nach Anspruch 1, wobei die erste gestanzte Spule und die zweite gestanzte Spule in Reihe geschaltet sind.

4. Drahtlosladespule nach Anspruch 1, wobei die erste gestanzte Spule und die zweite gestanzte Spule parallelgeschaltet sind.

5. Drahtlosladespule nach Anspruch 1, wobei die erste gestanzte Spule ein inneres Ende und ein äußeres Ende einschließt, wobei das innere Ende auf der gleichen Seite der ersten gestanzten Spule angeordnet ist wie das äußere Ende.

6. Drahtlosladespule nach Anspruch 5, weiter einen ersten Jumper umfassend, der am äußeren Ende der ersten Spule angebracht ist.

7. Drahtlosladespule nach Anspruch 6, wobei die zweite gestanzte Spule ein inneres Ende und ein äußeres Ende einschließt, und weiter einen zweiten Jumper umfassend, der am inneren Ende der ersten Spule und dem äußeren Ende der zweiten Spule angebracht ist.

8. Drahtlosladespule nach Anspruch 7, weiter einen dritten Jumper umfassend, der am inneren Ende der zweiten Spule angebracht ist.

9. Verfahren zur Herstellung einer Drahtlosladespule, umfassend:
Stanzen eines Metallblechs, um eine erste Spule (1130) zu bilden, die eine erste spiralförmige Bahn (1131) aufweist, wobei die erste spiralförmige Bahn einen ersten Raum zwischen Wicklungen definiert;
Aufbringen der ersten gestanzten Spule über einen ersten Klebstoff (1127) derselben auf einen ersten Schichtstoff (1123);
Stanzen eines Metallblechs, um eine zweite Spule (1150) zu bilden, die eine zweite spiralförmige Bahn (1151) aufweist, wobei die zweite spiralförmige Bahn einen zweiten Raum zwischen Wicklungen definiert;
Aufbringen der zweiten gestanzten Spule über einen zweiten Klebstoff (1129) derselben auf einen zweiten Schichtstoff (1125);
Positionieren der ersten gestanzten Spule und der zweiten gestanzten Spule ineinander, um eine plane Spulenbaugruppe zu bilden, bei der die erste gestanzte Spule innerhalb des zweiten Raums der zweiten gestanzten Spule positioniert ist, und die zweite gestanzte Spule innerhalb des ersten Raums der ersten gestanzten Spule positioniert ist, und die erste gestanzte Spule und die zweite gestanzte Spule zwischen dem ersten und dem zweiten Schichtstoff positioniert sind;
Erhitzen und Pressen der planen Spulenbaugruppe, um die Klebstoffe des ersten und des zweiten Schichtstoffes zu verdrängen und auszuhärten, sodass sie die erste und die zweite Spule umgeben und miteinander verkleben.

10. Verfahren nach Anspruch 9, wobei Hitze, die durch die Heißpresse aufgebracht wird, die Klebstoffe schmilzt, aber nicht den Schichtstoff schmilzt.

11. Verfahren nach Anspruch 10, wobei Druck, der durch die Heißpresse aufgebracht wird, die Klebstoffe verdrängt und zwischen die erste Bahn der ersten Spule und die zweite Bahn der zweiten Spule zwängt, um die Spulen zu isolieren.

12. Verfahren nach Anspruch 9, wobei das Stanzen des Metallblechs die erste Spule mit Verbindungsstegen bildet.

13. Verfahren nach Anspruch 12, das weiter das Stanzen der ersten Spule umfasst, um die Verbindungsstege zu entfernen.

14. Verfahren nach Anspruch 9, wobei die erste gestanzte Spule und die zweite gestanzte Spule in Reihe geschaltet werden.

15. Verfahren nach Anspruch 9, wobei die erste gestanzte Spule und die zweite gestanzte Spule parallelgeschaltet werden.

16. Verfahren nach Anspruch 9, wobei die erste gestanzte Spule ein inneres Ende und ein äußeres Ende einschließt, wobei das innere Ende auf der gleichen Seite der ersten gestanzten Spule angeordnet ist wie das äußere Ende.

17. Verfahren nach Anspruch 16, das weiter einen ersten Jumper umfasst, der am äußeren Ende der ersten Spule angebracht wird.

18. Verfahren nach Anspruch 17, wobei die zweite gestanzte Spule ein inneres Ende und ein äußeres Ende einschließt, und weiter einen zweiten Jumper umfasst, der am inneren Ende der ersten Spule und dem äußeren Ende der zweiten Spule angebracht wird.

19. Verfahren nach Anspruch 18, das weiter einen dritten Jumper umfasst, der am inneren Ende der zweiten Spule angebracht wird.

## Revendications

1. Bobine de charge sans fil comprenant :
une première bobine emboutie (1130) présentant une première trace en spirale (1131), la première trace en spirale définissant un premier espace entre des enroulements ; et
une seconde bobine emboutie (1150) présentant une seconde trace en spirale (1151), la seconde trace en spirale définissant un second espace entre des enroulements,
la première bobine emboutie et la seconde bobine emboutie en relation coplanaire, la première bobine emboutie positionnée au sein du second espace de la seconde bobine emboutie, et la seconde bobine emboutie positionnée au sein du premier espace de la première bobine emboutie, les première et seconde bobines connectées électroniquement ; et
dans laquelle la bobine de charge sans fil comprend en outre un premier stratifié (1123) appliqué à la première bobine emboutie avec un premier adhésif (1127) pour faire adhérer le premier stratifié à la première bobine emboutie ; et **caractérisée par**
un second stratifié (1125) appliqué à la seconde bobine emboutie avec un second adhésif (1129) pour faire adhérer le second stratifié à la seconde bobine emboutie ; et
dans laquelle le premier stratifié et le second stratifié prennent en sandwich les bobines avec le second adhésif positionné entre la première trace en spirale (1131) de la première bobine emboutie (1130) et la seconde trace en spirale (1151) de la seconde bobine emboutie (1150) pour lier les bobines ensemble et pour isoler les bobines.

2. Bobine de charge sans fil selon la revendication 1, dans laquelle la première bobine emboutie et la seconde bobine emboutie sont positionnées entre le premier stratifié et le second stratifié.

3. Bobine de charge sans fil selon la revendication 1, dans laquelle la première bobine emboutie et la seconde bobine emboutie sont connectées en série.

4. Bobine de charge sans fil selon la revendication 1, dans laquelle la première bobine emboutie et la seconde bobine emboutie sont connectées en parallèle.

5. Bobine de charge sans fil selon la revendication 1, dans laquelle la première bobine emboutie inclut une extrémité intérieure et une extrémité extérieure, l'extrémité intérieure disposée du même côté de la première bobine emboutie que l'extrémité extérieure.

6. Bobine de charge sans fil selon la revendication 5, comprenant en outre un premier cavalier attaché à l'extrémité extérieure de la première bobine.

7. Bobine de charge sans fil selon la revendication 6, dans laquelle la seconde bobine emboutie inclut une extrémité intérieure et une extrémité extérieure, et comprenant en outre un deuxième cavalier attaché à l'extrémité intérieure de la première bobine et à l'extrémité extérieure de la seconde bobine.

8. Bobine de charge sans fil selon la revendication 7, comprenant en outre un troisième cavalier attaché à l'extrémité intérieure de la seconde bobine.

9. Procédé de fabrication d'une bobine de charge sans fil comprenant :
l'emboutissage d'une tôle pour former une première bobine (1130) présentant une première trace en spirale (1131), la première trace en spirale définissant un premier espace entre des enroulements ;
l'application de la première bobine emboutie à un premier stratifié (1123) par l'intermédiaire d'un premier adhésif (1127) de celui-ci ;
l'emboutissage d'une tôle pour former une seconde bobine (1150) présentant une seconde trace en spirale (1151), la seconde trace en spirale définissant un second espace entre des enroulements ;
l'application de la seconde bobine emboutie à un second stratifié (1125) par l'intermédiaire d'un second adhésif (1129) de celui-ci ;
l'interposition de la première bobine emboutie et de la seconde bobine emboutie pour former un ensemble bobine planaire avec la première bobine emboutie positionnée dans le second espace de la seconde bobine emboutie, et la seconde bobine emboutie positionnée dans le premier espace de la première bobine emboutie, et la première bobine emboutie et la seconde bobine emboutie positionnées entre les premier et second stratifiés ;
le chauffage et le pressage de l'ensemble bobine planaire pour déplacer et fixer les adhésifs des premier et second stratifiés pour entourer et lier ensemble les première et seconde bobines.

10. Procédé selon la revendication 9, dans lequel de la chaleur appliquée par la presse à chaud fait fondre les adhésifs, mais ne fait pas fondre le stratifié.

11. Procédé selon la revendication 10, dans lequel la pression appliquée par la presse à chaud déplace et force les adhésifs entre la première trace de la première bobine et la seconde trace de la seconde bobine pour isoler les bobines.

12. Procédé selon la revendication 9, dans lequel l'emboutissage de la tôle forme la première bobine avec des traverses.

13. Procédé selon la revendication 12, comprenant en outre l'emboutissage de la première bobine pour retirer les traverses.

14. Procédé selon la revendication 9, dans lequel la première bobine emboutie et la seconde bobine emboutie sont connectées en série.

15. Procédé selon la revendication 9, dans lequel la première bobine emboutie et la seconde bobine emboutie sont connectées en parallèle.

16. Procédé selon la revendication 9, dans lequel la première bobine emboutie inclut une extrémité intérieure et une extrémité extérieure, l'extrémité intérieure disposée du même côté de la première bobine emboutie que l'extrémité extérieure.

17. Procédé selon la revendication 16, comprenant en outre un premier cavalier attaché à l'extrémité extérieure de la première bobine.

18. Procédé selon la revendication 17, dans lequel la seconde bobine emboutie inclut une extrémité intérieure et une extrémité extérieure, et comprenant en outre un deuxième cavalier attaché à l'extrémité intérieure de la première bobine et à l'extrémité extérieure de la seconde bobine.

19. Procédé selon la revendication 18, comprenant en outre un troisième cavalier attaché à l'extrémité intérieure de la seconde bobine.
